# EUROPÄISCHE PATENTSCHRIFT

(11) **EP 3 478 997 B1**
(45) Veröffentlichungstag und Bekanntmachung des Hinweises auf die Patenterteilung: **13.05.2020**
(21) Anmeldenummer: 17731916.7
(22) Anmeldetag: 23.06.2017
(51) Int. Cl.: F16L 5/02, E04B 1/68, H02G 3/22, F16J 15/46

(54) **ABDICHTUNG GEGEN WASSERFORTLEITUNG**
SEALING AGAINST WATER
JOINT D'ETANCHEITE CONTRE LA CONDUCTION D'EAU

(30) Priorität: 01.07.2016 EP 16177469
(43) Veröffentlichungstag der Anmeldung: 08.05.2019
(73) Patentinhaber: Fibre Optics CT GmbH, Consulting & Testing, 70437 Stuttgart (DE)
(72) Erfinder: WOLF, Roland, 70437 Stuttgart (DE)
(74) Vertreter: Jeck, Anton
(86) Internationale Anmeldenummer: PCT/EP2017/065542
(87) Internationale Veröffentlichungsnummer: WO 2018/001896

(56) Entgegenhaltungen:
- WO-A1-96/04504
- DE-A1- 4 105 625
- DE-A1- 10 341 005

## Beschreibung

Die Erfindung betrifft eine Vorrichtung zur Ein-/Zweiweg-Kabel-Abdichtung gegen Wassereintritt und Rauchdurchdringung in Zwischenräumen und in Hohlräumen, Kabelschutzrohren und Wanddurchführungen, die mit Kabeln und/oder Rohren belegt sind.

In der EP 1686 670 B1 ist eine wiederverwendbare Vorrichtung zum Abdichten von Zwischenräumen, Anheben oder Sichern von Werkstücken beschrieben.

In der EP 1867 904 B1 ist eine wiederverwendbare Vorrichtung zum gas- und druckwasserdichten Verschließen von Hohlräumen, zwischen Mauerdurchbrüchen sowie zwischen Kabelkanälen und zur Abdichtung von Zwischenräumen bei Stellwänden beschrieben.

In der PCT/EP 2016/052784 ist eine wiederverwendbare Schutzvorrichtung gegen Wasser- und Rauchfortleitung in Kanälen und Gewerken beschrieben.

Die EP 1 867 904 B1 lehrt ein wiederverwendbares Flachschlauchkissen zum Abdichten von Hohlräumen mit einem Ventil. Die Verwendung eines abdichtenden Quellfließ-Dichtbands, von Crimphülsen zum druckdichten Verschließen sowie eines thermoplastischen Einfüllschlauchs gehen aus ihr nicht hervor.

Die WO 2016/128 435 offenbart ein Flachschlauchkissen mit Dichtmittel, welches über ein Druckluftventil je nach Anforderung befüllt oder evakuiert werden kann. Die Verwendung von Crimphülsen zum druckdichten Verschließen sowie eines druckdicht verschweißbaren thermoplastischen Einfüllschlauchs gehen aus ihr nicht hervor.

Die DE 103 41 005 A1 lehrt eine Abdicht-, Hebe- und/oder Sicherungsvorrichtung, welche als Flachschlauchkissen ausgebildet ist und mit druckfesten Verschlüssen an den Enden versehen ist. Seitlich ist an dem Flachschlauchkissen ein Ventil vorgesehen, mittels welchem die Vorrichtung mit einem Gas oder einer Flüssigkeit befüllbar ist. Bei dem Ventil handelt es sich um einen wiederverwendbaren Einlass für Füllmaterial. Die Verwendung eines Quellfließ-Dichtbands geht aus ihr nicht hervor.

Aufgabe der vorliegenden Erfindung ist es, aus Verbundfolie, mit oder ohne metallische Einlage, eine quellvliesbeschichtete Ein-/Zweiweg-Abdichtung gegen Wasserfortleitung zu schaffen.

Diese Aufgabe wird mit den Merkmalen des Anspruchs 1 gelöst.

Vorteile dieser Ausgestaltung sind ihre einfache Montage, sowie ihre einfache Demontage und unkritische Entsorgung.

Eine erste vorteilhafte Ausgestaltung der Erfindung ist dadurch gekennzeichnet, dass eine einlagige, in etwa kreisförmige, vorzugsweise schneckenförmige Anordnung des Flachschlauchabdichtkissens in dem Zwischenraum und/oder in dem Hohlraum vorgesehen ist, wobei der Thermoplast-Einfüllschlauch für eine Summenleckrate von ≤ 2,7 mbar I/Jahr im Heißsiegelschweißverfahren mit dem Flachschlauchabdichtkissen verbunden ist, wobei die Dichtigkeit des Thermoplast-Einfüllschlauchs durch Verklemmen mittels Crimphülse, vorzugsweise in Kombination mit Crimpzange, und/oder Verschweißen mittels Heizklemme bis 3 bar überdruckdicht erzielbar ist. Besonders bevorzugt liegt die Weiterentwicklung darin, dass das Flachschlauchabdichtkissen über den Thermoplast-Einfüllschlauch mit einem gasförmigen Medium gefüllt ist und der bis 3 bar überdruckdichte Einfüllschlauch durch Verpressen mittels Crimphülse in Kombination mit einer Crimpzange und/oder Verschweißen mittels Heizklemme hergestellt ist. Diese Lösung, insbesondere entsprechend Anspruch 2 und 7, ist weitgehend temperaturunabhängig und überdruckdicht. Eine Dichtigkeit des Flachschlauchabdichtkissens kann demnach durch Aufeinanderpressen beziehungsweise Zusammenpressen der Innenwandung des thermoplastischen Einfüllschlauchs mittels einer den Schlauch umgebende, vorzugsweise quetschdeformierten, Crimphülse bereitgestellt sein.

Eine weitere vorteilhafte Ausgestaltung der Erfindung besteht darin, dass das Quellvlies-Dichtband elastisch, nicht dauerhaft selbstklebend, und/oder nach Wasserkontakten schnell quellend und/oder mit einem Flächengewicht von 200 g/m² bis 480 g/m² ausgebildet ist. Besonders bevorzugt liegt die Weiterentwicklung darin, dass die Quellvlies-Abdichtsterne, zum Einschieben zwischen Kabeln und/oder Rohren, insbesondere aus zwei übereinander gelegten Quellvlies-Abdichtbändern vorzugsweise mit zwei Längsnähten und einer Quernaht, und/oder zwei übereinander gelegten Quellvlies-Abdichtbändern, vorzugsweise mit einer ≥ 5 mm breiten Längsschweißnaht, hergestellt sind. Diese Lösung, insbesondere entsprechend Anspruch 4 und 6, bietet Dichtheit gegen Wasserfortleitung bis 5 m Wassersäule unmittelbar nach Wasserkontakt, den Wegfall einer Wartezeit bis zur Dichtheit nach der Montage und die leichten Demontage, ohne die Gefahr einer Beschädigung von Kabeln oder Rohren.

Eine bevorzugte Weiterbildung der Erfindung besteht darin, dass das Flachschlauchabdichtkissen im Anwendungsbereich als Einzelelement voll-, halbkreisförmig oder schneckenhausförmig im Hohlraum-, Kabelschutzrohr- oder Wanddurchführungsumfang angeordnet ist, wobei sich der Thermoplast-Einfüllschlauch mindestens an einem Ende des Flachschlauchabdichtkissens befindet.

Eine zweckmäßige Weiterentwicklung der vorliegenden Erfindung besteht darin, dass beim Abdichten von mit Kabeln und/oder Rohren durchzogenen Hohlräumen, Kabelschutzrohren oder Wanddurchführungen im Bereich der Berührungsstellen von Kabeln und/oder Rohren eine zumindest teilweise Umwicklung der selbigen aus einem Quellvlies-Dichtband mit bzw. ohne Klebefolie vorgesehen ist und sich im Innenraum Füllelemente oder Quellvlies-Abdichtsterne befinden, die aus Quellvlies-Dichtbandmaterial hergestellt sind.

Eine besonders bevorzugte Weiterbildung der Erfindung besteht darin, dass das Flachschlauchabdichtkissen mit einem gefalteten Band oder Flachschlauch gebildet ist, der je nach dem Anwendungsbereich Thermoplast, Elastomeren und/oder schwer entflammbaren Thermoplast-Elastomer-Gemischen aufweist, wobei diese Stoffe metallische und/oder metallfreie Einlagen aufweisen.

Eine weitere vorteilhafte Ausgestaltung der Erfindung besteht darin, dass das Flachschlauchabdichtkissen, insbesondere das Band, mit metallischer Einlage vorzugsweise mindestens aus einer fünflagigen Thermoplast-Verbundfolie mit den Lagen
- 100 bis 250 µm PE
- 10 bis 23 µm PET
- 9 bis 5 µm ALU
- 10 bis 3 µm PET
- 100 bis 250 µm PE
hergestellt ist.

Diese Lösung, insbesondere entsprechend Anspruch 9, weist eine vergleichsweise lange Brauchbarkeitsdauer von ca. 5 bis 7 Jahren und eine hohe Beständigkeit gegen Chemiekaliengemische und Umwelteinflüsse auf.

Eine weitere vorteilhafte Ausgestaltung der Erfindung besteht darin, dass das Flachschlauchabdichtkissen aus einer dreilagigen Thermoplast-Verbundfolie ohne metallische Einlage mit dem Aufbau
- 100 bis 250 µm PE
- 9 bis 23 µm PET oder gleichwertige PBT, PPE, PP, PE insbesondere Tyvek < 64,4 g/m² etc.
- 100 bis 250 µm PE
hergestellt ist.

Diese Lösung, insbesondere entsprechend Anspruch 10, reduziert den Aufwand und die Gefahr von Beschädigungen in Anwendungen, bei denen die Abdichtung auf Grund von Nachbelegungen oft gewechselt werden muss.

Besonders bevorzugt ist es vorgesehen, dass das Flachschlauchabdichtkissen mit metallischer Einlage eine Summenleckrate von ≤ 2,7 mbar I/Jahr und das dreilagig aufgebaute, metallfreie Abdichtkissen eine solche von ≤ 200 mbar I/Jahr aufweist.

Die Erfindung wird nun anhand von Ausführungsbeispielen näher erläutert. Es zeigen:
- Fig. 1: eine perspektivische, geöffnete Ansicht einer Einweg-Abdichtung gegen Wasserfortleitung,
- Fig. 2: eine perspektivische Ansicht einer der in Fig. 1 gezeigten ähnlichen Einweg-Abdichtung,
- Fig. 3a-3d: eine Querschnittsansicht einer Einweg-Abdichtung nach den Fig. 1 und 2,
- Fig. 4: eine Querschnittsansicht einer der Fig. 3a ähnliche Einweg-Abdichtung,
- Fig. 5: eine perspektivische Ansicht der in den Fig. 3 und 4 gezeigten Kabelschutzrohr- und/oder Rohr-Zwischenraumabdichtung,
- Fig. 6: eine perspektivische Ansicht der in den Fig. 3 und 4 gezeigten Zwischenraumabdichtung.

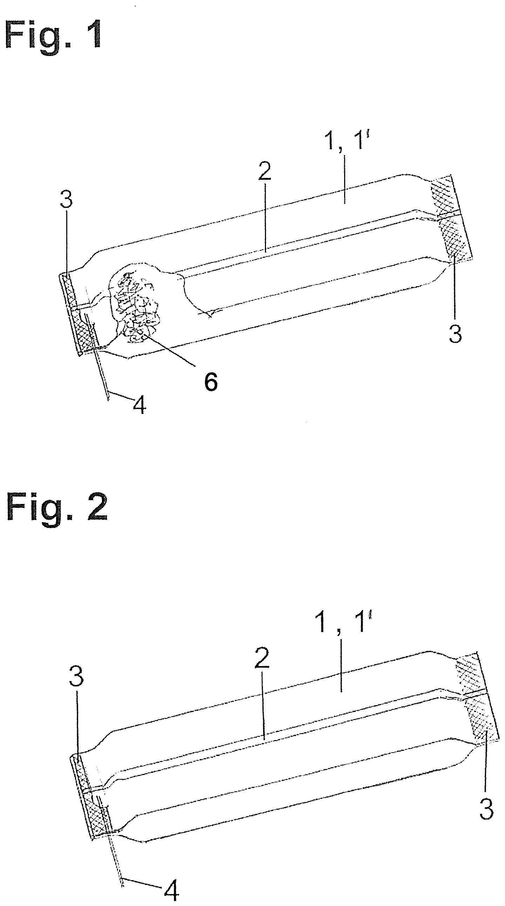

Fig. 1 zeigt die Ein-/Zweiweg-Abdichtung, mit dem Flachschlauchabdichtkissen 1, z. B. in Breiten von 100 mm bis 150 mm und Längen von 150 mm bis 1000 mm, mit vorzugsweise innenliegendem gasförmigen Dichtmittel 6, mit oder ohne Metalleinlage, aus einer, insbesondere im Bahngasschweißen und Heißsiegelschweißverfahren hergestellten, druckbeständigen, mindestens dreilagigen Thermoplast-Verbundfolie 1a oder fünflagigen Aluminium-Verbundfolie 1a, welche mit einem eingeschweißten Thermoplast-Einfüllschlauch 4, zum Befüllen des Abdichtkissens, verbunden ist, der sich an der Längsseite 2 und/oder an einer der Breitseiten 3 des Flachschlauchabdichtkissens befinden kann.

Die Fig. 2 zeigt eine perspektivische Ansicht der Fig. 1, bei der das Einweg-Flachschlauchabdichtkissen 1 kein innenliegendes Dichtmittel enthält.

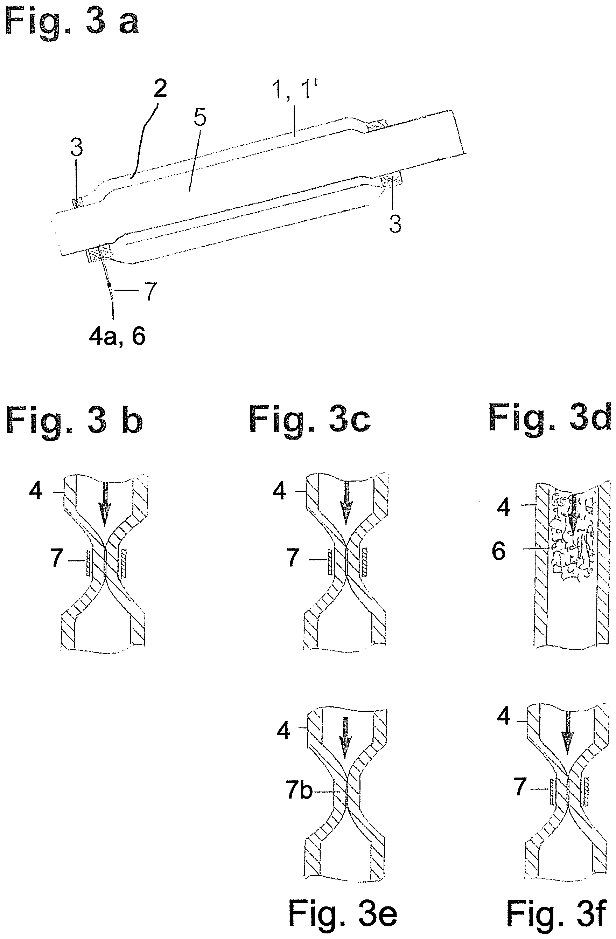

Die Fig. 3a zeigt eine perspektivische Ansicht der Fig. 1 und 2, mit einem beidseitig außen mit Quellvlies-Dichtband 5 beschichteten Flachschlauchabdichtkissen 1, das mit einem vorzugsweise im Heißsiegelschweißverfahren verschweißten Thermoplast-Einfüllschlauch 4a versehen ist, dass sich an einer der 15 cm bis 100 cm langen Längsseiten 2 oder an den 10 cm bis 15 cm großen Stirn- bzw. Breitseiten 3 des Flachschlauchabdichtkissens 1, befindet und bei kreisförmiger Anwendung zur optimalen Druckverteilung dienen kann. Die Ausbildung als Flachschlauchabdichtkissen 1 wird vorzugsweise durch Herstellung von druckdichten Verschlüssen in Längsrichtung und an den beiden Enden 3 der Verbundfolien-Oberflächen erzielt. Nach Druckfüllung mit Luft 6 über den Einfüllschlauch 4a, kann die Druckdichtigkeit des Thermoplast-Einfüllschlauches 4a, wie in den Fig. 3b bis 3f gezeigt, durch Verpressen des Einfüllschlauches 4a mit einer in Fig. 3a angedeuteten Crimphülse 7 mittels einer Crimpzange und/oder Verschweißen des Einfüllschlauchs mittels Heizklemme erzielt werden.

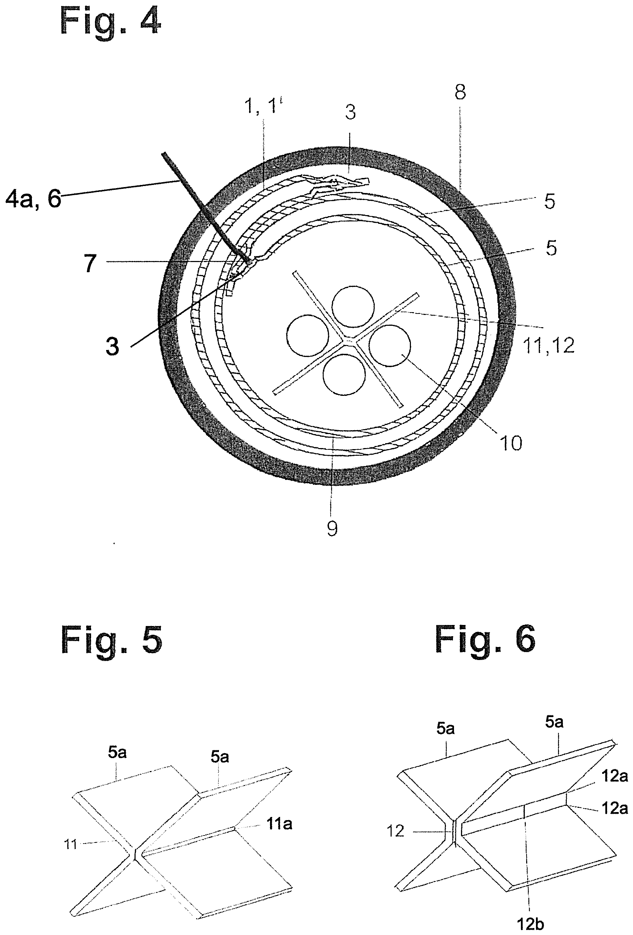

Die Fig. 4 zeigt einen Querschnitt einer der Fig. 3 ähnlichen Einwegabdichtvorrichtung 1, die vorzugsweise zur kreisförmigen Verwendung 9, zur Kabel- und/oder Rohr-Zwischenraumabdichtung mit Wechselwirkung insbesondere bei Wärme und Wasser, in mit mehreren Kabeln und/oder Rohren 10 belegten Kanälen 8, Rohren 8 und/oder Wanddurchführungen 8, vorgesehen ist. Die Einwegabdichtvorrichtung 1 kann quellvliesbeschichtet 5 sein und kann einen hochfrequenzverschweißten Quellvlies-Medium-Abdichtstern 11 oder einen Quellvlies-Einschiebe-Abdichtstern 12 aufweisen kann, welcher vorzugsweise mindestens zwei Längsnähte 12a und eine Quernaht 12b aufweisen kann.

Je nach Anwendungsbereich kann das Flachschlauchabdichtkissen 1 kreisförmig 9, vorzugsweise mit schneckenförmiger Überlappung 9 zwischen einer Wanddurchführung 8 bzw. Kabelschutzrohr 8 und einem Medienrohr 8 oder Mehrfach-Medienrohr 8 bzw. Mehrfach-Kabel 8 eingelegt werden. Durch Befüllen der Vorrichtung 1 über den Thermoplast-Einfüllschlauch 4a, z. B. mit Luft 6, können die Hohlräume mit dem Quellvlies-Dichtband 5 und/oder einem Quellvlies-Abdichtstern 11, 12 ausgefüllt werden. Die Druckfüllung erfolgt vorzugsweise über einen Einfülladapter, welcher mit einer Druckluftquelle verbunden ist und zur Befüllung auf den Einfüllschlauch aufgesteckt wird. Mittels Verpressung des Einfüllschlauchs 4a mit der Crimphülse 7 mittels einer Crimpzange und/oder durch Verschweißen, insbesondere mittels einer Heizklemme kann das Flachschlauchabdichtkissen besonders luftdicht verschlossen werden. Der Schlauch 4a kann demnach von mindestens einer, vorzugsweise mindestens zwei Crimphülsen umgeben sein. Durch Verquetschung der Crimphülse 7 auf dem Schlauch 4a kann dieser druckdicht verschlossen werden. Nach Abschneiden der Crimphülse 7 und/oder Versschweißungsstelle am Einfüllschlauch 4a ist eine Demontage innerhalb einer Minute und vorzugsweise über eine mindestens zweite am Einfüllschlauch vorgesehene Crimphülse eine zweite Montage beziehungsweise Befüllung mit Gas möglich. Das Flachschlauchabdichtkissen 1 kann im Hausmüll entsorgt werden.

Die Fig. 5 zeigt eine perspektivische Ansicht der in Fig. 4 gezeigten Vierkammer-Quellvlies-Medium-Abdichtstern-Zwischenraumabdichtung 11. Diese kann aus mindestens zwei übereinander gelegten Quellvlies-Dichtbändern 5a, die mittig in Längsrichtung 11a hochfrequenzverschweißt sind hergestellt sein.

Die Fig. 6 zeigt eine ähnliche Vorrichtung wie in den Figuren 4 und 5, die als Vierkammer-Quellvlies-Einschiebe-Abdichtstern 12 mit Wechselwirkung bei Wärme und Wasser ausgebildet ist, bei dem an den Quellvlies-Dichtbändern 5a in Längsrichtung 12a vorzugsweise zwei und mittig 12b mindestens eine Hochfrequenzschweißung und/oder Naht angebracht sein können. Vorzugsweise bildet der Abdichtstern offene Kammern, welche von jeweils zwei Flächen des Abdichtsterns begrenzt sind.

Bei den unterschiedlichen Ausgestaltungen wird die abdichtende Wirkung insbesondere durch zwei Funktionen erreicht. Die erste abdichtende Funktion hat das Flachschlauchabdichtkissen 1 mit Schlauchanschluss, das unter Druck das Quellvlies-Dichtband 5, 5a und/oder die Abdichtsterne 11, 12 in die Zwischenräume presst. Die zweite abdichtende Funktion kommt erst zum Tragen, wenn Wasser oder Chemikaliengemische insbesondere mit pH2, pH12 und/oder ca. 80 % Benzin, Diesel, Kerosin oder Paraffinölgemisch das Quellvlies-Dichtband 5, 5a, 11, 12 aktiviert. Bei Flüssigkeitseintritt quillt ein im, z. B. als PP-Vlies-Dichtband (Polypropylen) ausgeführtes, Quellvlies-Dichtband 5, 5a, 11, 12 eingebettetes Polymer an den nicht verpressten Abdichtstellen auf und schafft durch seine extrem dichte, vorzugsweise gelförmige, in das PP-Vlies-Dichtband eingebettete Dichtschicht den Schutz z. B. gegen Wasserfortleitung während des Wassereintritts. Nach Trocknung der Gelschicht kann ein Überdruck bei Wärme von ≥ 0,3 bar durch das Quellvlies-Dichtband 5, 5a, beziehungsweise den daraus gebildeten Abdichtstern 11, 12 entweichen; bei neuem Wassereintritt quillt das Polymer wieder zuverlässig auf.

Bei der Befüllung des Flachschlauchabdichtkissens über den Thermoplast-Einfüllschlauch, z. B. mit Luft, werden die Quellvlies-Dichtbänder beziehungsweise die Sterne 5, 5a, 11, 12 in die Zwischenräume der Kabel gepresst. Als Werkstoff für das Quellvlies kann ein mechanisch vorgefertigtes, thermofixiertes Nadelvlies aus PP-Fasern vorzugsweise mit wasserabsorbierenden Superabsorber-Spezialfasern bevorzugt UV-stabilisiert dienen. Das Quellvlies-Dichtband weist vorzugsweise ein Flächengewicht von 480 g/m² auf. Die Materialdicke des Quellvlies-Dichtbands kann insbesondere bis zu 3,8 bis 4,2 mm oder mehr sein und kann dazu dienen, Kabel- und/oder Rohr-Zwischenräume von bis zu 9 cm oder mehr gegen Wasserfortleitung in Kabelschutzrohren und Gebäudedurchführungen bis 10 m Wassersäule abzudichten. Die abdichtende Wirkung kann durch eine werksseitige Abdichtkissenumwicklung mit einem vorzugsweise einseitig selbstklebenden Quellvlies-Dichtband und die Kabel/Kabel-/Rohr-Zwischenraumabdichtung (Abdichtstern) durch Einlegen eines Kabels oder Rohres in eine der Kammern des Quellvlies-Abdichtsternes erzielt werden.

Die abdichtende Funktion des Dichtbandes kommt bei Kontakt mit Wassergemischen zum Tragen. Ein nachteiliges Verkleben des Abdichtsterns 11, 12 oder des Flachschlauchabdichtkissens 1 tritt bei dem verwendeten Quellfließ nicht auf, weswegen eine schnelle und einfache Demontage, insbesondere nach einem Kontakt mit Wasser, ermöglicht ist.

Zum Abdichten von Kabel- und/oder Rohrzwischenräumen bei mehrfach belegten Kabelschutzrohren 8 oder Wanddurchführungen 8 kann ein Quellvlies-Abdichtstern 11, 12 vorzugsweise zwischen die zwei, drei oder vier Kabel und/oder Rohre 8 eingelegt werden. Durch Umlegen eines überstehenden Endes einer Fläche über jeweils ein, in eine Kammer des Abdichtsterns eingelegtes, Kabel oder Rohr können eine Mehrzahl von Kabeln oder Rohren sicher voneinander getrennt und der sie umgebende Innenraum zufriedenstellend gegen Wasserfortleitung abgedichtet werden. Nach Aufpumpen z. B. mit Luft wird je nach Anwendungsbereich eine Abdichtungsvorrichtung mit Wechselwirkung erzielt, so dass bei Kabelschutzrohren 8 der Überdruck entweichen kann und vom Rohrende eine Wasserdruckdichtigkeit bis 5 m bei einer Wassersäule von - 0,5 bar erzielt wird.

Vorzugsweise betrifft die Erfindung ein Abdichtsystem gegen Wassereintritt und Rauchdurchdringung in Zwischenräumen, Hohlräumen, Kabelschutzrohren oder in Wanddurchführungen (8), mit mindestens einem Innenraum, der mit Kabeln (10) und/oder Rohren (10) belegbar ist, welches das voranstehend beschriebene Flachschlauchabdichtkissen aufweist, wobei der abzudichtende Hohlraum mindestens ein innenliegendes Kabel oder Rohr aufweist, welches vorzugsweise im Kontaktbereich mit dem Flachschlauchabdichtkissen von Quellvlies-Dichtband umgeben ist und in welchen vorzugsweise ein voranstehend beschriebener Abdichtstern eingesetzt ist, wobei vorzugsweise mindestens ein freies Ende des Abdichtsterns das Kabel oder Rohr in einem Kontaktbereich mit dem selbigen umgibt, wobei das Flachschlauchabdichtkissen für einen Wassereintritt und/oder Rauchdurchdringung mit einem Gas, vorzugsweise mit Druckluft befüllt ist, wobei das Flachschlauchabdichtkissen gegen die Innenwandung des abzudichtenden Rohres und die in dem Rohr liegenden Kabel, vorzugsweise in einem Querschnitt durch den Hohlraum raumfüllend, gepresst ist. Das Abdichtsystem wird vorzugsweise mit dem erfindungsgemäßen Quell-Vlies beschichteten Flachschlauchabdichtkissen und dem Abdichtstern gebildet.

Vorzugsweise weist das erfindungsgemäße Flachschlauchabdichtkissen oder das erfindungsgemäße Abdichtsystem ein abnehmbares Befüllungselement auf, welches ausgebildet ist, einen Formschluss um den thermoplastischen Einfüllschlauch des Flachschlauchabdichtkissens zu bilden und das Flachschlauchabdichtkissens über den Einfüllschlauch zu befüllen.

Besonders bevorzugt weist das Befüllungselement einen Einfülladapter auf, welcher ausgebildet ist, den Einfüllschlauch zumindest bereichsweise formschlüssig zu umgeben.

Zweckmäßiger Weise kann das Befüllungselement einen Druckrückstopbefüller aufweisen, welcher ausgebildet ist ein Ventil am Einfülladapter zu dem Einfüllschlauch zu öffnen und vorzugsweise ausgebildet ist, beim Erreichen eines vorbestimmten Zieldrucks das Ventil zum Einfüllschlauch zu schließen.

Besonders zweckmäßiger Weise kann der Druckrückstopbefüller beim Erreichen eines Zieldrucks weiteres in das Befüllungselement eingeleitetes Gas an die Umgebung ableiten. Vorzugsweise ist das Befüllungselement, insbesondere der Druckrückstopbefüller mit einer Druckgasquelle, insbesondere einer Druckluftquelle verbunden.

Besonders bevorzugt kann eine weitere Gaszufuhr durch eine Ringschraube an dem Befüllungselement, insbesondere an dem Druckrückstopbefüller einstellbar sein.

### Bezugszeichenliste

- 1: Flachschlauchabdichtkissen
- 1a: Drei- oder fünflagige, druckbeständige Thermoplast-Verbundfolie
- 2: Längsseiten im Bahngasschweißverfahren verschweißt
- 3: Breitseiten im Heißsiegelschweißverfahren verschweißt
- 4a: Thermoplast-Einfüllschlauch mit Heißsiegelverschweißung
- 5: Quellvlies-Dichtband an den Außenseiten des Abdichtkissens
- 5a: Quellvlies-Dichtband 200g/m² oder 480g/m²
- 6: Abdichtkissen-Luft-Überdruckfüllung
- 7: Überdruckdichter Verschluss bestehend aus einer Crimphülse verschließbar mittels einer Crimpzange
- 7b: Überdruckdichter Verschluss mittels Heizklemme verschweißt
- 8: Hohlraum, Kabelschutzrohr, Wanddurchführung
- 9: Einlagige, kreisförmige Anordnung des Flachschlauchabdichtkissens
- 10: Belegung mit Kabel oder Rohren
- 11: Hochfrequenzverschweißter Quellvlies-Medium-Abdichtstern
- 11a: Hochfrequenzverschweißte Schweißnaht am Quellvlies-Dichtband des Quellvlies-Medium-Abdichtstern Quellvlies-Medium-Abdichtsterns 11
- 12: Quellvlies-Einschiebe-Abdichtstern mit Nähten
- 12a: Quellvlies-Dichtband Längsnaht am Quellvlies-Dichtband des Quellvlies-Einschiebe-Abdichtsterns 12
- 12b: Mitten-Naht am Quellvlies-Dichtband des Quellvlies-Einschiebe-Abdichtsterns 12

## Patentansprüche

1. Vorrichtung zur Ein-/Zweiweg-Kabel-Abdichtung gegen Wassereintritt und Rauchdurchdringung in Zwischenräumen, Hohlräumen, Kabelschutzrohren oder in Wanddurchführungen (8), mit mindestens einem Innenraum, der mit Kabeln (10) und/oder Rohren (10) belegbar ist, und mit einem in der Länge und Breite festlegbaren Flachschlauchabdichtkissen (1),
**dadurch gekennzeichnet,**
**dass** das Flachschlauchabdichtkissen (1) als Zwischenraumabdichtung an mindestens zwei Außenseiten mit einem Quellvlies-Dichtband (5) ausgebildet ist,
**dass** an einer Längsseite (2) oder an einer Breitseite (3) des Flachschlauchabdichtkissen (1) ein Thermoplast-Einfüllschlauch (4a) vorgesehen ist, welcher an einem Außenumfang mindestens eine Crimphülse aufweist, wobei das Flachschlauchabdichtkissen (1) im eingebauten Zustand mit einem gasförmigem Medium (6) befüllt und überdruckdicht verschlossen ist,
**dass** für den überdruckdichten Verschluss zumindest eine der mindestens einen Crimphülse (7) mittels einer Crimpzange verpressbar ist und/oder der Thermoplast-Einfüllschlauch (4a) durch Verschweißen mittels Heizklemme (7b) verschließbar ist.

2. Vorrichtung nach Anspruch 1,
**dadurch gekennzeichnet,**
**dass** eine einlagige, kreisförmige Anordnung (9) des Flachschlauchabdichtkissens (1) in dem Zwischenraum und im Hohlraum vorgesehen ist, wobei der Thermoplast-Einfüllschlauch (4a) für eine Summenleckrate von < 2,7 mbar I/Jahr im Heißsiegelschweißverfahren mit dem Flachschlauchabdichtkissen (1) verbunden ist,
wobei die Dichtigkeit des Thermoplast-Einfüllschlauchs (4a) durch Verklemmen mittels Crimphülse (7) in Kombination mit Crimpzange und/oder Verschweißen mittels Heizklemme (7b) bis 3 bar überdruckdicht erzielbar ist.

3. Vorrichtung nach Anspruch 1 oder 2,
**dadurch gekennzeichnet,**
**dass** das Flachschlauchabdichtkissen (1) im Anwendungsbereich als Einzelelement voll- oder halbkreisförmig im Hohlraum-, Kabelschutzrohr- oder Wanddurchführungsumfang (8) angeordnet ist, wobei sich der Thermoplast-Einfüllschlauch (4, 4a) mindestens an einem Ende (3) des Flachschlauchabdichtkissens (1) befindet.

4. Vorrichtung nach den Ansprüchen 1 bis 3,
**dadurch gekennzeichnet,**
**dass** das Quellvlies-Dichtband (5a) elastisch, nicht dauerhaft selbstklebend, nach Wasserkontakten schnell quellend und mit einem Flächengewicht von 200 g/m² bis 480 g/m² ausgebildet ist.

5. Vorrichtung nach einem der Ansprüche 1 und 4,
**dadurch gekennzeichnet,**
**dass** beim Abdichten von mit Kabeln (10) und/oder Rohren (10) durchzogenen Hohlräumen, Kabelschutzrohren oder Wanddurchführungen (8) im Bereich der Berührungsstellen von Kabeln (10) und/oder Rohren (10) eine Umwicklung der selbigen aus einem Quellvlies-Dichtband (5, 5a) mit bzw. ohne Klebefolie vorgesehen ist und sich im Innenraum Füllelemente oder Quellvlies-Abdichtsterne (11, 12) befinden, die aus Quellvlies-Dichtbandmaterial (5, 5a) hergestellt sind.

6. Vorrichtung nach Anspruch 5,
**dadurch gekennzeichnet,**
**dass** die Quellvlies-Abdichtsterne (12), zum Einschieben zwischen Kabeln (10) und/oder Rohren (10), aus zwei übereinander gelegten Quellvlies-Abdichtbändern (5, 5a) mit zwei Längsnähten und einer Quernaht (12a) und/oder zwei übereinander gelegten Quellvlies-Abdichtbändern (5, 5a) mit einer ≥ 5 mm breiten Längsschweißnaht (11a), hergestellt sind.

7. Vorrichtung nach den Ansprüchen 1 und 2,
**dadurch gekennzeichnet,**
**dass** das Flachschlauchabdichtkissen (1) über den Thermoplast-Einfüllschlauch (4a) mit einem gasförmigen Medium (6) gefüllt ist und der bis 3 bar überdruckdichte Einfüllschlauch (4, 4a) durch Verpressen mittels Crimphülse (7) in Kombination mit einer Crimpzange und/oder Verschweißen mittels Heizklemme (7b) hergestellt ist.

8. Vorrichtung nach einem der Ansprüche 1, 2, 3 und 7,
**dadurch gekennzeichnet,**
**dass** das Flachschlauchabdichtkissen (1) mit einem gefalteten Band oder Flachschlauch gebildet ist, der je nach dem Anwendungsbereich Thermoplast, Elastomeren und/oder schwer entflammbaren Thermoplast-Elastomer-Gemischen aufweist, wobei diese Stoffe metallische und/oder metallfreie Einlagen aufweisen.

9. Vorrichtung nach einem der Ansprüche 1, 2, 3 und 7,
**dadurch gekennzeichnet,**
**dass** das Band des Flachschlauchabdichtkissens (1, 1a) mit metallischer Einlage vorzugsweise mindestens aus einer fünflagigen Thermoplast-Verbundfolie (1a) mit den Lagen
- 100 bis 250 µm PE
- 10 bis 23 µm PET
- 9 bis 5 µm ALU
- 10 bis 3 µm PET
- 100 bis 250 µm PE
hergestellt ist.

10. Vorrichtung nach einem der Ansprüche 1, 2, 3, 7 und 8,
**dadurch gekennzeichnet,**
**dass** das Flachschlauchabdichtkissen aus einer dreilagigen Thermoplast-Verbundfolie (1a) ohne metallische Einlage mit den Lagen
- 100 bis 250 µm PE
- 9 bis 23 µm PET oder gleichwertige PBT, PPE, PP, Tyvek < 64,4 g/m² etc.
- 100 bis 250 µm PE
hergestellt ist.

11. Vorrichtung nach einem der Ansprüche 1, 2, 3, 7, 8 , 9 und 10,
**dadurch gekennzeichnet,**
**dass** das Flachschlauchabdichtkissen (1) mit metallischer Einlage eine Summenleckrate von < 2,7 mbar I/Jahr und das dreilagig aufgebaute, metallfreie Abdichtkissen eine solche von < 200 mbarl/Jahr aufweist.

## Claims

1. An apparatus for one-way/two-way cable sealing to prevent the entry of water and the penetration of smoke into interstices, hollow spaces, cable protection tubes or wall bushings (8), having at least one interior space that can be occupied by cables (10) and/or tubes (10), and having a lay-flat hose sealing pad (1) that can be fixed in length and width,
**characterized in that**
the lay-flat hose sealing pad (1) is embodied as an interstice seal with a swelling nonwoven sealing tape (5) on at least two outer sides;
that on one longitudinal side (2) or one widthwise side (3) of the lay-flat hose sealing pad (1), a thermoplastic filling hose (4a) is provided, which on an outer circumference has at least one crimp barrel, and the lay-flat hose sealing pad (1) in the installed state is filled with a gaseous medium (6) and is closed in overpressure-tight fashion;
that for the overpressure-tight closure, at least one of the at least one crimp barrel (7) can be compressed by means of a crimping tool, and/or the thermoplastic filling hose (4a) is closeable by welding by means of a heating clamp (7b).

2. The apparatus of claim 1,
**characterized in that**
a single-layer, circular arrangement (9) of the lay-flat hose sealing pad (1) is provided in the interstice and in the hollow space, and the thermoplastic filling hose (4a) is joined to the lay-flat hose sealing pad (1) by hot-seal welding process for a total leak rate of < 2.7 mbar l/year;
and the tightness of the tightness of the thermoplastic filling hose (4a) that is overpressure-tight up to 3 bar is attainable by clamping by means of a crimp barrel (7) in combination with a crimping tool and/or welding by means of a heating clamp (7b).

3. The apparatus of claim 1 or 2,
**characterized in that**
the lay-flat hose sealing pad (1) is located, in the area where it is employed, as a single element in fully circular or semicircular form in circumference (8) of the hollow space, cable protection tube or wall bushing, and the thermoplastic filling hose (4, 4a) is located on at least one end (3) of the lay-flat hose sealing pad (1).

4. The apparatus of claims 1 through 3,
**characterized in that**
the swelling nonwoven sealing tape (5a) is embodied as elastic, not permanently self-adhesive, quickly swelling after contact with water, and with a mass per unit area of 200 g/m² up to 480 g/m².

5. The apparatus of one of claims 1 and 4,
**characterized in that**
upon sealing of hollow spaces, through which cables (10) and/or tubes (10) pass, in the vicinity of the contact points of cables (10) and/or tubes (10), a wrapping thereof, the wrapping consisting of a swelling nonwoven sealing tape (5, 5a) with or without adhesive film is provided, and filling elements or swelling nonwoven sealing stars (11, 12) are located in the interior and these elements or stars are manufactured from swelling nonwoven sealing tape material (5, 5a).

6. The apparatus of claim 5,
**characterized in that**
the swelling nonwoven sealing stars (12), for insertion between cables (10) and/or tubes (10), are made from two swelling nonwoven sealing tapes (5, 5a) placed one above the other with two longitudinal seams and one transverse seam (12a) and/or two swelling nonwoven sealing tapes (5, 5a) placed one above the other, with a longitudinal welding seam (11a) having a width of ≥ 5 mm.

7. The apparatus of claims 1 and 2,
**characterized in that**
the lay-flat hose sealing pad (1) is filled via the thermoplastic filling hose (4a) with a gaseous medium (6), and the filling hose (4, 4a) with overpressure-tightness of up to 3 bar is manufactured by compressing by means of a crimp barrel (7) in combination with a crimping tool and/or welding by means of a heating clamp (7b).

8. The apparatus of one of claims 1, 2, 3 and 7,
**characterized in that**
the lay-flat hose sealing pad (1) is formed with a folded tape or flat hose, which depending on the where it is employed has thermoplastic, elastomers, and/or highly inflammable thermoplastic/elastomer mixtures, and these substances have metal and/or metal-free inlays.

9. The apparatus of one of claims 1, 2, 3 and 7,
**characterized in that**
the tape of the lay-flat hose sealing pad (1, 1a) is manufactured with a metal inlay consisting preferably of at least one five-layer thermoplastic composite film (1a) having the following layers:
- 100 to 250 µm PE
- 10 to 23 µm PET
- 9 to 5 µm ALU
- 10 to 3 µm PET
- 100 to 250 µm PE.

10. The apparatus of one of claims 1, 2, 3, 7 and 8,
**characterized in that**
the lay-flat hose sealing pad is produced from a three-layer thermoplastic composite film (1a) without a metal inlay, having the following layers:
- 100 to 250 µm PE
- 9 to 23 µm PET or equivalent PBT, PPE, PP, Tyvek < 64.4 g/m² etc.
- 100 to 250 µm PE.

11. The apparatus of one of claims 1, 2, 3, 7, 8, 9 and 10,
**characterized in that**
the lay-flat hose sealing pad (1) having a metal inlay has a total leak rate of < 2.7 mbar I/year, and the metal-free sealing pad constructed in three layers has such a rate of < 200 mbar I/year.

## Revendications

1. Dispositif pour l'étanchéité du câble à sens unique/à sens double contre la pénétration de l'eau et l'infiltration de la fumée dans les espaces intermédiaires, dans les cavités, les tuyaux pour la protection des câbles ou les traversées murales (8) avec au minimum un habitacle muni de câbles (10) et/ou de tuyaux (10) et avec un tampon étanche d'un tuyau tressé (1) fixé dans la longueur et la largeur est caractérisé de sorte que
Le tampon étanche d'un tuyau tressé (1) est formé en qualité d'étanche des espaces intermédiaires au minimum au deux côtés extérieures avec un ruban d'étanchéité de source non tissé
Qu'un tuyau de remplissage thermoplastique (4a) est prévu au côté longitudinal (2) et au côté large (3) du tampon étanche d'un tuyau tressé (1) présentant au minimum à la périphérie extérieure un manchon de sertissage où le tampon étanche d'un tuyau tressé (1) est rempli à l'état intégré avec une matière gazeuse et est fermable à une pression positive dense.
Qu'au minimum l'un des manchons de sertissage (7) est compressible pour la fermeture à une pression positive dense par l'intermédiaire d'une pince de sertissage et/ou le tuyau de remplissage thermoplastique (4a) est fermable par soudage et par une pince à chauffage.

2. Dispositif selon la revendication 1 est caractérisé de sorte qu'un dispositif mono-couche circulaire (9) du tampon étanche d'un tuyau tressé (1) est prévu dans l'espace intermédiaire et dans la cavité où le tuyau de remplissage thermoplastique (4a) est relié avec un taux de fuite globale de <2,7 mbarl/an dans le procédé de soudure de thermoscellage avec le tampon étanche d'un tuyau tressé (1) où l'épaisseur du tuyau de remplissage thermoplastique (4a) s'obtient par le biais du blocage par le biais de manchons de sertissage (7) en combinaison avec les pinces de sertissage et/ou la soudure par le biais de pince à chauffage (7b) jusqu'à 3 de la pression positive dense.

3. Dispositif selon la revendication 1 ou 2 est caractérisé de sorte qu'un tampon étanche d'un tuyau tressé (1) est disposé dans le champ d'application en qualité d'élément de segment à titre circulaire complet ou partiel dans la cavité, dans le tuyau de protection du câble ou dans la traversée murale (8) où le tuyau de remplissage thermoplastique (4, 4a) se situe au minimum à la débouchure (3) du tampon étanche d'un tuyau tressé (1).

4. Dispositif selon la revendication 1 jusqu'à 3 est caractérisé de sorte que le ruban d'étanchéité de source non tissé (5a) est formé à titre élastique, autoadhésif à titre non durable, gonflé au contact de l'eau rapidement et présentant un poids de surface de 200g/m2 jusqu'à 480 g/m2.

5. Dispositif selon la revendication 1 et 4 est caractérisé de sorte que les cavités, les tuyaux de protection de câble et les traversés murales (8), infiltrés lors de la mise en étanchéité des câbles (10) et/ou des tuyaux (10) au niveau des points de contact des câbles (10) et/ou des tuyaux (10), prévoient un ficelage d'un ruban d'étanchéité de source non tissé (5, 5a) avec respectivement ou le cas échéant sans feuille adhésive et qu'au niveau de l'habitacle des éléments de remplissage ou des étoiles d'étanchéité de source non tissées sont produits de matériel de ruban d'étanchéité de source non tissé (5, 5a).

6. Dispositif selon la revendication 5 est caractérisé de sorte que les étoiles d'étanchéité de source non tissées (12) sont produites pour l'insertion entre les câbles (10) et/ou les tuyaux (10) de deux bandes d'étanchéité de source non tissées superposées (5, 5a) avec deux soudures longitudinales et une soudure transversale (12a) et/ou deux bandes d'étanchéité de source non tissées superposées (5, 5a) avec une soudure longitudinale (11a) large de ≥ 5 mm.

7. Dispositif selon la revendication 1 ou 2 est caractérisé de sorte que le tampon étanche d'un tuyau tressé (1) est rempli sur le tuyau de remplissage thermoplastique (4a) avec une matière gazeuse (6) et le 3 tuyau de remplissage à une pression positive dense (4, 4a) est produit par le biais de la compression via des pinces de sertissage (7) en combinaison avec des tenailles de sertissage et/ou la soudure par l'intermédiaire d'une borne de chauffage (7b).

8. Dispositif selon la revendication 1,2,3 et 7 est caractérisé de sorte que le tampon étanche d'un tuyau tressé (1) est formé d'une bande pliée ou d'un tuyau plat présentant en fonction du champ d'application du thermoplaste, de l'élastomère et/ou des mélanges difficilement inflammables du thermoplaste et d'élastomère où ces matières présentent des apports métalliques et/ou exempts de matériaux.

9. Dispositif selon la revendication 1,2,3 et 7 est caractérisé de sorte que la bande du tampon étanche d'un tuyau tressé (1, 1a) est produite avec un apport métallique à titre préférentiel au minimum d'une feuille composite thermoplastique à cinq couches (1a) présentant les positions suivantes:
- 100 jusqu'à 250 um PE
- 10 jusqu'à 23 um PET
- 9 jusqu'à 5 um ALU
- 10 jusqu'à 3 um PET
- 100 jusqu'à 250 um PE.

10. Dispositif selon la revendication 1,2,3, 7 et 8 est caractérisé de sorte que le tampon étanche d'un tuyau tressé est produit d'une feuille composite thermoplastique à 3 couches (1a) sans apport métallique présentant les positions suivantes :
- 100 jusqu'à 250 um PE
- 9 jusqu'à 23 um PET ou l'équivalent PBT, PPE, PP, Tyvek<64,4 g/m2 etc.
- 100 jusqu'à 250 um PE

11. Dispositif selon la revendication 1,2,3, 7, 8, 9 et 10 est caractérisé de sorte que le tampon étanche d'un tuyau tressé (1) présente avec apport métallique d'un taux de fuite globale de <2,7 mbarl/an et que le tampon étanche à trois couches construit exempte de métaux présente un taux similaire de <200mbarl/an.
